# EUROPÄISCHE PATENTSCHRIFT

(11) **EP 3 591 007 B1**
(45) Veröffentlichungstag und Bekanntmachung des Hinweises auf die Patenterteilung: **07.12.2022**
(21) Anmeldenummer: 19192025.5
(22) Anmeldetag: 07.03.2017
(51) Int. Cl.: C08L 67/02, C08L 75/04, C08L 77/12

(54) **THERMOPLASTISCHE ZUSAMMENSETZUNG**
THERMOPLASTIC COMPOSITIONS
COMPOSITION THERMOPLASTIQUE

(30) Priorität: 10.03.2016 DE 102016104379
(43) Veröffentlichungstag der Anmeldung: 08.01.2020
(62) Teilanmeldung aus: 17712930.1
(73) Patentinhaber: FKuR Property GmbH, 47844 Willich (DE)
(72) Erfinder: KRPAN, Karel, 35135 Padova (IT); DOLFEN, Edmund, 47804 Krefeld (DE); NEUMANN, Frank-Martin, 79862 Höchenschwand (DE); MICHELS, Carmen, 47877 Willich (DE)
(74) Vertreter: Wittmann, Ernst-Ulrich

(56) Entgegenhaltungen:
- WO-A1-99/40797
- US-A1- 2003 166 748
- US-A1- 2011 311 743
- US-A1- 2013 136 879

## Beschreibung

Die vorliegende Erfindung betrifft eine thermoplastische Zusammensetzung, wie sie insbesondere in der Extrusion und Compoundierung eingesetzt wird sowie ein Verfahren zum Herstellen von Folien, Filmen, Formkörpern, Schaumstoffen, Beschichtungen, Lacken und Dispersionen unter Einsatz der erfindungsgemäßen thermoplastischen Zusammensetzung sowie mittels des erfindungsgemäßen Verfahrens hergestellte Folien, Filme, Formkörper, Schaumstoffe, Beschichtungen, Lacke und Dispersionen.

Thermoplastische Zusammensetzungen, insbesondere solche bei denen biogene Polymere beteiligt sind, sind im Stand der Technik bekannt und werden insbesondere in der Extrusion und Compoundierung eingesetzt. Hierbei funktionieren Verfahren auf dem Stand der Technik zur Erzeugung von Polymerabmischungen zumeist nach dem Grundschema, dass ein polymeres Trägermaterial als Hauptbestandteil einer Rezeptur und ein oder mehrere weitere Polymere zusammen extrudiert werden. Dabei dosiert man sehr häufig Füllstoffe meist im oberen Bereich der Einzugszone des Extruders hinzu, um die spezifischen Eigenschaften des Produktes variieren und gleichzeitig die Rezepturkosten reduzieren zu können. Weitere Additive haben den Zweck, die Verträglichkeit zwischen den polymeren Edukten und den Füllstoffen zu verbessern. Schließlich sind Weichmacher in vielen Rezepturen sowohl für die Prozessführung als auch für das Produktergebnis unverzichtbar.

Für ein optimales Resultat ist eine stabile und robuste Prozessführung von entscheidender Bedeutung, dabei kommt dem prozentualen Anteil von Wasser im Compound eine entscheidende Bedeutung zu.

Wasser kann als Rezepturbestandteil bei Compoundier- und Extrusionsprozessen und insbesondere in der Funktion als Weichmacher eingesetzt werden. Der Einsatz von Wasser hat jedoch insbesondere die nachfolgend beschriebenen Nachteile.

Extrusionsprozesse finden in aller Regel weit oberhalb des Siedepunkts von Wasser statt, so dass bei unvollständiger Entgasung das wasserhaltige Compound unkontrollierbar aufschäumt Gleichzeitig erfolgen die Extrusionsprozesse unter einem angelegten hohen Druck. Im Bereich der Austrittsdüse des Extruders fällt hierbei der Druck abrupt ab. Dies bedingt, dass es dort zu einer schlagartigen Expansion des Extrudatwassers kommt und damit ein vermehrtes Aufschäumen des Extrudats an der Austrittsdüse einsetzt mit behindernden Auswirkungen auf das Extrusionsergebnis und die weitere Prozessführung. Eine effiziente Entgasung beispielsweise durch Vakuumabsaugung kann diesem Effekt potentiell entgegenwirken, ist jedoch mit einem erheblichen technischen Aufwand verbunden.

Des Weiteren kann unter typischen Extrusionsbedingungen bei Zonentemperaturen von » 130°C, welche gewöhnlich für derartige Zusammensetzungen benötigt werden, Wasser bereits als Elektronendonor (Lewis-Base) fungieren, da Wasser freie Valenzen besitzt, die zur Ausbildung kovalenter Bindungen geeignet sind und damit nachteilige nucleophile Reaktionen auslösen. Der hydrolytische Abbau von Polyestern ist im Stand der Technik ein hinlänglich bekannter nachteiliger Effekt, wobei neben der eigentlichen Abbaureaktion gleichsam unerwünschte Nachpolymerisationen und Vernetzungsreaktionen stattfinden können. Bei typischen biogenen Polymeren wie den Polysacchariden, Hemicellulosen oder Polyhydroxyalkonaten, aber auch erdölbasierten biologisch abbaubaren Polymeren wie z.B. den Polyvinylderivaten führt dies zu Spaltungsreaktionen, Bildung kleiner Molekülfragmente und Umesterungen, so dass der Extrusionsprozess insgesamt unkontrollierbar werden kann. Zudem bildet Wasser in unerwünschter Weise mit vielen kleinen Molekülen unterschiedlicher Polarität in der Regel azeotrope Gemische, bei denen Dampf- und Flüssigkeitsphase gleich sind. Deren Zusammensetzung hat unkontrollierbare Auswirkungen auf die Compoundier- und Extrusionsprozesse. Zwar kann Wasser naturgemäß durch den Einsatz vernetzender Anhydride wie beispielhaft durch Maleinsäure, Bernsteinsäure, Phtalsäure, Caprolactam abgefangen werden. Dies führt jedoch unweigerlich zu potentiell nachteilig veränderten stofflichen Eigenschaften, weil die Anhydride zu Kettenverlängerern oder Vernetzern umfunktioniert werden.

Bei vielen biologisch abbaubaren und/oder kompostierbaren Kunststoffen ist ein signifikant hoher nachteiliger Wasseranteil jedoch häufig unvermeidbar. Bei diesen Kunststoffen wird beispielsweise häufig Stärke gerade auch in nativer Form als Strukturelement hinzugeführt, welche konventionelle nicht-biogene Strukturbildner ersetzt. Wasser ist zu etwa 12 - 20% ein Strukturbestandteil nativer, makromolekularer Stärke. Selbst bei modifizierten Stärkeformen werden meist immer noch Eigenwasserwerte > 5 % erreicht. Die Einarbeitung von Stärken in das Compound stellt aufgrund des relativ hohen Eigenwassergehalts der Stärken beim Compoundierprozess verfahrensbedingt ein Problem dar, es sei denn, dass die Evaporation durch Vakuumabsaugung unterbunden werden kann. Aber auch der häufig unvollständige Grad des Aufschlusses der spezifischen Stärken kann zu unkontrollierbaren Resultaten führen.

Des Weiteren kann Stärke unter Hitzeeinwirkung, wie sie beim Extrudieren auftritt, physikalisch ein Vielfaches ihres Eigengewichtes an Wasser binden, aufquellen und verkleistern. Beim Erhitzen mit Wasser quillt die Stärke durch Wassereinlagerung bei etwa 47 - 57 °C, und bei etwa 55 - 87 °C entsteht durch Stärkeaufschluss sogenannter Stärkekleister, welcher je nach der Stärkesorte verschiedenes Viskositätsvermögen aufweist. Dabei kann die bereits verkleisterte Stärke die Gashaltung im Extrudat unterstützen und zu festen Poren führen mit entsprechend unerwünschten Konsequenzen für die weitere Prozessführung.

Um bei stärkebeinhaltenden biologisch abbaubaren und/oder kompostierbaren Kunststoffen die Stärke während der Extrusion und Compoundierung gut verarbeiten zu können, muss ein Weichmacher eingesetzt werden. Es sind zahlreiche Weichmacher im Stand der Technik bekannt, die für Compoundier- und Extrusionsprozesse Verwendung finden. Im Stand der Technik sind ferner die WO 99/40797 A1, US 2013/136879 A1, US 2003/166748 A1 und US 2011/311743 A1 bekannt, die den technologischen Hintergrund der vorliegenden Erfindung betreffen.

Aufgabe der vorliegenden Erfindung ist es, die im Stand der Technik bekannten Nachteile wenigstens teilweise zu überwinden. Die vorstehende Aufgabe wird durch eine erfindungsgemäße thermoplastische Zusammensetzung gemäß Anspruch 1 gelöst. Insbesondere werden erfindungsgemäß Füllstoffe und/oder Weichmacher nicht alleine zur Produktvariation und Kostenlenkung, sondern als Quencher zum Abfangen bzw. Inertisieren von Wasser während des Compoundier- und Extrusionsvorgangs eingesetzt. Bevorzugte Ausgestaltungsformen der thermoplastischen Zusammensetzung sind Gegenstand der Unteransprüche.

Die erfindungsgemäße thermoplastische Zusammensetzung zum Einsatz in der Extrusion und Compoundierung umfasst:
(a) eine kontinuierliche Phase, die wenigstens ein erstes Polymer aufweist, welches aus einer Gruppe ausgewählt wird, welche einen Polyester, ein Polyesteramid, ein Polyesteretheramid, ein aliphatisches oder teilaromatisches Polyesterurethan oder Abmischungen davon, insbesondere solche Verbindungen oder Abmischungen mit hydrophoben Oberflächeneigenschaften aufweist,
(b) wenigstens eine dispergierte Phase, die
   (i) als zweites Polymer wenigstens einen biogenen Vernetzer umfasst, welcher einen Wasseranteil von 0,1 bis 30 Gew. %, insbesondere von 5 bis 25 Gew. % in Bezug auf dessen Gesamtgewicht aufweist und worin das erste Polymer der kontinuierlichen Phase nicht mit dem zweiten Polymer der dispergierten Phase mischbar ist, und
   (ii) wenigstens einen anorganischen Füllstoff und
   (iii) wenigstens einen Weichmacher aufweist.

Die erfindungsgemäße thermoplastische Zusammensetzung ist dadurch gekennzeichnet, dass der Weichmacher Diglycerin oder Abmischungen mit Diglycerin aufweist und der anorganische Füllstoff Phosphate des Calciums und/oder des Magnesiums umfasst und einen Anteil von 0,1 bis 40 Gew. % in Bezug auf das Gesamtgewicht der Zusammensetzung hat und wobei die Zusammensetzung biologisch abbaubar und/oder kompostierbar ist Im Sinne der vorliegenden Erfindung soll unter "hydrophob" die Neigung verstanden werden, Wasser nicht zu binden bzw. nicht temporär physikalisch anzulagern und/oder in hydratisierter Form nicht noch weitere Wassermoleküle anzulagern. Dabei können insbesondere die Oberflächen des ersten Polymers durch hydrophobe Beschichtungen, Grundierungen oder Versiegelungen modifiziert sein.

Es hat sich überraschenderweise gezeigt, dass der Einsatz derartig modifizierter Enantiomerenverhältnisse des Diglycerins in einer thermoplastischen Zusammensetzung die geschilderten Stand der Technik Probleme bei Coumpoundier- und Extrusionsprozessen zumindest teilweise überwinden kann und insbesondere die beschriebenen unkontrollierbaren, durch gasförmiges Wasser im Compound verursachten nucleophilen Reaktionsmechanismen unterdrückt werden. Des Weiteren wird der azeotrope Effekt nach Abmischung von wasserhaltigem Compound mit zugesetztem Glycerin unterdrückt, so dass Glycerin in Kombination mit derartig modifizierten Enantiomerenverhältnissen des Diglycerins erfindungsgemäß eingesetzt werden kann. Es hat sich beispielsweise überraschenderweise gezeigt, dass bei einer derartig modifizierten Zusammensetzung Glycerin selbst zu einem Anteil bis zu 60 % als Weichmacherkomponente in die thermoplastische Zusammensetzung hinzudosiert werden kann, ohne dass eine nennenswerte Evaporation des Extrudatwassers mit den beschriebenen nachteiligen Effekten stattfindet und dies in der bisherigen Praxis bis hin zu Extruder-Zonentemperaturen von etwa 190 °C. Der Einsatz derartiger Enantiomerenverhältnisse des Diglycerins ermöglicht weiterhin dem Compound sogenannte Polyglycerine zuzusetzen, wobei es sich nicht um definierte Verbindungen, sondern um auf der Basis des Glycerinmonomers erzeugte Oligomere mit statistischen Kettenlängenverteilungen handelt. Dabei können Polyglycerine ab dem Trimer wie beispielsweise das Glycerin-Trimer, - Tetramer, -Pentamer, -Hexamer, -Heptamer, -Oktamer, -Enneamer, -Dekamer oder Vielfachen hiervon erfindungsgemäß eingesetzt werden. Diese sind ohne den Einsatz des erfindungsgemäßen Enantiomerenverhältnisses des Diglycerins aufgrund ihrer hohen Viskosität nur schwierig in den Compoundierprozess einzubringen. Dies da es sich um Flüssigkeiten mit sehr hohen Viskositäten handelt, welche eine präzise Dosierung nahezu unmöglich machen und welche auch bei temperaturbedigtem Viskositätsabfall eine solide Durchmischung im Compound längs des Schneckengangs des Extruders verhindern.

Gemäß einer weiteren bevorzugten Ausführungsform der erfindungsgemäßen thermoplastischen Zusammensetzung weist der Weichmacher eine Abmischung von
(a) Diglycerin und Triglycerin oder
(b) Diglycerin und Glycerin oder
(c) Diglycerin, Triglycerin und Glycerin auf,
wobei die Abmischung unter (a), (b) und (c) das Diglycerin in dieser Zusammenstellung wenigstens zwischen 25 und 75 Gew. % in Bezug auf die Summe (a) des Diglycerins und des Triglycerins, (b) des Diglycerins und des Glycerins oder (c) des Diglycerins, des Glycerins und des Triglycerins umfasst

Gemäß einer weiteren bevorzugten Ausführungsform der erfindungsgemäßen thermoplastischen Zusammensetzung weist der anorganische Füllstoff hydrophile Eigenschaften auf.

Im Sinne der vorliegenden Erfindung soll unter "hydrophil" die Neigung verstanden werden Wasser zu binden bzw. temporär physikalisch anzulagern und/oder in hydratisierter Form noch weitere Wassermoleküle anzulagern.

Die erfindungsgemäßen hydrophilen anorganischen Füllstoffe fungieren daher vorteilhaft als Abfänger (Quencher) des Wassers der thermoplastischen Zusammensetzung und wirken damit den unkontrollierbaren, durch gasförmiges Wasser verursachten nucleophilen Reaktionsmechanismen bei Compoundier- und Extrusionsprozessen, insbesondere beim Extrudieren im Bereich der Austrittsdüse des Extruders entgegen.

Bei den erfindungsgemäßen anorganischen Füllstoffen können insbesondere die Oberflächen aber auch innere Bestandteile hydrophile Eigenschaften aufweisen. Insbesondere die Oberflächen der anorganischen Füllstoffe können durch hydrophile Beschichtungen, Grundierungen oder Versiegelungen modifiziert sein.

Erfindungsgemäß umfasst der anorganische Füllstoff Phosphate des Calciums und/oder Magnesiums.

Der Einsatz dieser Füllstoffe hat noch einen weiteren Vorteil, der darin besteht, dass sich mit ihnen vergleichbare Elastizitätswerte wie mit Talkum erzeugen lassen. Dieser Umstand ist besonders interessant, weil das karzinogene Potential des Talkums mit Asbest als vergleichbar eingestuft wird.

Dadurch wird gegenüber einer Zusammensetzung ohne derartige anorganische Füllstoffe eine höhere Bruchdehnung und Weiterreißarbeit des Werkstoffs, insbesondere bei Verwendung von Sulfatsalzen eines Erdalkalimetalls erzielt Des Weiteren hat sich überraschenderweise gezeigt, dass insbesondere Sulfatsalze eines Erdalkalimetalls, alleine und besonders in Kombination mit Diglycerinen in erfindungsgemäßen Enantiomerenverhältnissen geeignet sind, den Compoundierprozess zu verbessern und auch bei der Extrusion die Probleme der Blasenbildung und des Aufschäumens an der Austrittsdüse des Extruders vermindern oder verhindern können.

Gemäß einer weiteren bevorzugten Ausführungsform der vorliegenden Erfindung sind die Salze der Erdalkalimetalle Calciumsulfate, vorzugsweise Gips, wie beispielsweise Naturgips, Naturanhydrit, Rauchgasgips oder Abmischungen daraus.

Insbesondere Gips in Kombination mit Diglycerinen in erfindungsgemäßen Enantiomerenverhältnissen ist besonders vorteilhaft zur Verbesserung der Compoundier- und Extrusionsprozesse.

Gemäß einer weiteren bevorzugten Ausführungsform der erfindungsgemäßen thermoplastischen Zusammensetzung sind die Salze der Erdalkalimetalle Phosphate, vorzugsweise Apatit, Phosporit und Hydroxylapatit bzw. Salze und Kondensate der ortho -

Calciumpolyphosphat, Magnesiumphosphat, Natriumcalciumpolyphosphat, Natriummagnesiumpolyphosphat und Cyclophosphate der Erdalkalimetalle Magnesium und Calcium.

Eine weitere bevorzugte Ausführungsform der erfindungsgemäßen thermoplastischen Zusammensetzung, wobei das erste Polymer der kontinuierlichen Phase
(a) biogene oder teilbiogene Komponenten aufweist und/oder ausgewählt ist aus einer Gruppe von Polyhydroxysäuren, Polyhydroxyalkanoaten, Polylactiden und Ligninen sowie deren Derivaten und/oder Copolymeren und insbesondere ausgewählt ist aus einer Gruppe bestehend aus Polybutylen-Adipat-Terephthalat (PBAT), Polybutylensebacinat-Terephthalat (PBST), Polybutylensuccinat (PBS), Polybutylensuccinat-Adipat (PBSA), und/oder
(b) synthetische Komponenten aufweist und ausgewählt ist aus einer Gruppe von aliphatischen und aromatischen Polyestern sowie aliphatisch-aromatischen CoPolyestern, beispielsweise Polybutylen-Adipat-Terephthalat (PBAT).

Gemäß einer besonders bevorzugten Ausführungsform der erfindungsgemäßen thermoplastischen Zusammensetzung ist die biogene oder teilbiogene Komponenten bzw. die synthetische Komponente Polybutylen-Adipat-Terephthalat (PBAT) oder weist Polybutylen-Adipat-Terephthalat (PBAT) auf.

Gemäß einer weiteren besonders bevorzugten Ausführungsform der erfindungsgemäßen thermoplastischen Zusammensetzung ist die biogene Komponente (a) Polybutylensebacinat-Co- Terephthalat (PBST) oder weist Polybutylensebacinat-Co-Terephthalat (PBST) auf. Gemäß einer weiteren besonders bevorzugten Ausführungsform der erfindungsgemäßen thermoplastischen Zusammensetzung ist die biogene Komponente (a) Polybutylensuccinat (PBS) oder weist Polybutylensuccinat (PBS) auf.

Gemäß einer weiteren besonders bevorzugten Ausführungsform der erfindungsgemäßen thermoplastischen Zusammensetzung ist die biogene Komponente (a) Polybutylensuccinat-Adipat (PBSA) oder weist Polybutylensuccinat-Adipat (PBSA) auf.

Gemäß einer weiteren bevorzugten Ausführungsform der erfindungsgemäßen thermoplastischen Zusammensetzung umfasst die Zusammensetzung als eine weitere dispergierte Phase wenigstens ein amorphes oder teilkristallines und insbesondere biogenes Polymer.

Unter "teilkristallin" im Sinne der vorliegenden Erfindung wird ein Feststoff verstanden, welcher sowohl kristalline als auch amorphe Bereiche (Domänen) aufweist.

Gemäß einer weiteren bevorzugten Ausführungsform der erfindungsgemäßen thermoplastischen Zusammensetzung ist das amorphe oder teilkristalline und insbesondere biogene Polymer ein Polymer oder Copolymer von Polymilchsäure (PLA) oder ein Polymer oder Copolymer von Polyhydroxyalkanoaten (PHA) und hier besonders von Polyhydroxybutyrat (PHB), Polyhydroxyvalerat (PHV), Polyhydroxy-butyrat-valerat (PHBV), Polyhydroxy-butyrat-hexanoat (PHBH), Polyhydroxyhexanoat (PHH), Polyhydroxyoctanoat (PHO) oder einer Abmischung aus wenigstens zwei der vorgenannten.

Gemäß einer weiteren bevorzugten Ausführungsform der erfindungsgemäßen thermoplastischen Zusammensetzung umfasst der biogene Vernetzer der dispergierten Phase polysaccharidische Strukturelemente, die aus einer Gruppe stammen, welche Stärken, die jeweils insbesondere eine spezifische Zusammensetzung aus Amylose und Amylopektin beinhalten, wie beispielsweise aus Kartoffel, Mais, Buchweizen, Weizen, Roggen, Hafer, Gerste, Reis, Erbsen und Tapioka, aufweisen.

Unter "Stärke" werden hier alle Arten von Stärke, d.h. Mehl, natürliche Stärke, chemisch und / oder physikalisch modifizierte Stärke, hydrolysierte Stärke, destrukturierte Stärke, gelatinisierte Stärke, plastifizierte Stärke, thermoplastische Stärke und Abmischungen daraus verstanden.

Stärken, die vollständig destruktiert sind oder geeignet sind, sich leicht weitgehend destruktieren zu lassen, haben sich als besonders vorteilhaft erwiesen.

In vorteilhafter Weise umfasst der biogene Vernetzer der dispergierten Phase der vorliegenden Erfindung mehr als ein polysaccharidisches Strukturelement. Gemische enthaltend Stärke und wenigstens ein zusätzliches polysaccharidisches Strukturelement als biogene Vernetzer der dispergierten Phase sind besonders bevorzugt.

In einer bevorzugten Ausführungsform der erfindungsgemäßen thermoplastischen Zusammensetzung weist der biogene Vernetzer der dispergierten Phase neben Stärke wenigstens ein zusätzliches polysaccharidisches Strukturelement auf, insbesondere ausgewählt aus der Gruppe bestehend aus Cellulose, Hemicellulose und/oder deren Derivaten, insbesondere Acetat-, Ester- und Ether-Derivaten.

Gemäß einer weiteren bevorzugten Ausführungsform der erfindungsgemäßen thermoplastischen Zusammensetzung ist das Verhältnis der polysaccharidischen Strukturelemente der dispergierten Phase zu dem wenigstens einen ersten Polymer der kontinuierlichen Phase 10 zu 90 Gew. % bis zu 90 zu 10 Gew. %, vorzugsweise in einem Verhältnis von 30 zu 70 Gew. % bis zu 70 zu 30 Gew. % und stärker bevorzugt in einem Verhältnis von 60 zu 40 Gew. % bis zu 40 zu 60 Gew. % ist, in Bezug auf die Summe der polysaccharidischen Strukturelemente der dispergierten Phase zu dem wenigstens einen ersten Polymer der kontinuierlichen Phase.

Gemäß einer weiteren bevorzugten Ausführungsform der erfindungsgemäßen thermoplastischen Zusammensetzung weist die Zusammensetzung zusätzlich weitere Additive, ausgewählt aus der Gruppe bestehend aus Dispergiermittel, Gleitmittel, vor Wasser schützenden Mitteln, Vernetzungsmittel, Phasenvermittler, Formentnahmehilfsmittel, Mischungsverbesserern, UV-Stabilisatoren und Katalysatoren sowie Antioxidantien auf.

Kettenverlängerer wie Mono-, Di- und Polyepoxide, Polyepoxid-Acrylate und deren Copolymeren mit Styrol, aliphatische, aromatische oder aliphatisch-aromatische Carbodiimid-Oligomere und Polymere, Isocyanate, Isocyanurate und Kombinationen davon, Anhydride und Polyanhydride, welche die Kompatibilität zwischen dem polysaccharidischen Strukturelement bzw. den polysaccharidischen Strukturelementen und den anderen Polymeren der Zusammensetzung verbessern, können ebenfalls zugegeben werden.

Des Weiteren liegt es im Sinne der vorliegenden Erfindung, die verschiedenen beschriebenen erfindungsgemäßen Zusammensetzungen jeweils als Vormischungen ("Masterbatches") in Stand-der-Technik-Verfahren einzusetzen.

Gegenstand der vorliegenden Erfindung ist weiterhin ein Verfahren zum Herstellen von Folien, Filmen, Formkörpern, Schaumstoffen, Beschichtungen, Lacken und Dispersionen unter Einsatz der erfindungsgemäßen thermoplastischen Zusammensetzung.

Die mittels des erfindungsgemäßen Verfahrens hergestellten Folien, Filme, Formkörper, Schaumstoffe, Beschichtungen, Lacke und Dispersionen sind ebenfalls Gegenstand der vorliegenden Erfindung.

Formkörper im Sinne der Erfindung wie bspw. Platten, Tafeln, Profile und Hohlkörper, insbesondere Flaschen und Gebinde sind im Stand der Technik bekannt.

Gemäß einer bevorzugten Ausführungsform weisen die erfindungsgemäßen Folien, Filme und Formkörper eine Wanddicke von zwischen 5 µm und 1000 µm bzw. eine Wandstärke von zwischen 10 µm und 2000 µm auf.

Die vorliegende Erfindung umfasst ferner auch die Verwendung der erfindungsgemäßen thermoplastischen Zusammensetzung insbesondere in der Extrusion und der Compoundierung zur Herstellung von Folien, Filmen, Formkörpern, Schaumstoffen, Beschichtungen, Lacken und Dispersionen. Im Sinne der Erfindung kann auch die Verwendung der thermoplastischen Zusammensetzung beim Spritzgießen, Spritzen, Kalandrieren, Rotationsformen, Tauchen, Streichen, Beschichten und Gießen sein.

Die Erfindung wird nachfolgend anhand bevorzugter Ausführungsbeispiele erläutert, wobei darauf hingewiesen wird, dass durch diese Beispiele Abwandlungen bzw. Ergänzungen wie sie sich für den Fachmann unmittelbar ergeben mit umfasst sind. Darüber hinaus stellen diese Ausführungsbeispiele keine Beschränkung der Erfindung in der Art dar, dass Abwandlungen und Ergänzungen im Umfang der vorliegenden Erfindung liegen.

Dabei zeigen:
**Fig. 1** den Einfluss der Zugabe von Calciumsulfat-Verbindungen, nämlich Gips-Anhydrid (Ca[SO₄]) (B), Gips-Hemihydrat (Ca[SO₄] × ½ H₂O) (C) und Gips-Dihydrat (Ca[SO₄] × 2 H₂O) (D) im Vergleich zur Zugabe von Kreide (Ca[CO₃], Standard) (A) auf die Bruchdehnung der erfindungsgemäßen Zusammensetzung.
**Fig. 2** den Einfluss der Zugabe von Calciumsulfat-Verbindungen, nämlich Gips-Anhydrid (Ca[SO₄]) (B), Gips-Hemihydrat (Ca[SO₄] × ½ H₂O) (C) und Gips-Dihydrat (Ca[SO₄] × 2 H₂O) (D) im Vergleich zur Zugabe von Kreide (Ca[CO₃], Standard) (A) auf die Weiterreißarbeit der erfindungsgemäßen Zusammensetzung.
**Fig. 3** den Einfluss der Zugabe von Calciumsulfat-Verbindungen, nämlich Gips-Anhydrid (Ca[SO₄]) (B), Gips-Hemihydrat (Ca[SO₄] × ½ H₂O) (C) und Gips-Dihydrat (Ca[SO₄] × 2 H₂O) (D) im Vergleich zur Zugabe von Kreide (Ca[CO₃], Standard) (A) auf die Bruchspannung der erfindungsgemäßen Zusammensetzung.
**Fig. 4** den Einfluss der Zugabe von tertiärem Calciumphosphat (Ca₃[PO₄]₂) (B) im Vergleich zur Zugabe von Talkum (Mg₃[Si₄O₁₀(OH)₂], Standard) (A) auf die Bruchdehnung (längs und quer) der erfindungsgemäßen Zusammensetzung.
**Fig. 5** den Einfluss der Zugabe von tertiärem Calciumphosphat (Ca₃[PO₄]₂) (B) im Vergleich zur Zugabe von Talkum (Mg₃[Si₄O₁₀(OH)₂], Standard) (A) auf die Zugfestigkeit (längs und quer) der erfindungsgemäßen Zusammensetzung.
**Fig. 6** den Einfluss der Zugabe von tertiärem Calciumphosphat (Ca₃[PO₄]₂) (B) im Vergleich zur Zugabe von Talkum (Mg₃[Si₄O₁₀(OH)₂], Standard) (A) auf die Weiterreißarbeit (längs und quer) der erfindungsgemäßen Zusammensetzung.
**Fig. 7** den Einfluss der Zugabe von verschiedenen Anteilen Talkum (Mg₃[Si₄O₁₀(OH)₂]), nämlich 6% (A), 12% (B) und 18% (C) auf den Abbau der erfindungsgemäßen Zusammensetzung.
**Fig. 8** den Einfluss der Zugabe von verschiedenen Anteilen tertiärem Calciumphosphat (Ca₃[PO₄]₂ im Vergleich zur Zugabe von 12% Talkum (Mg₃[Si₄O₁₀(OH)₂], Standard) (B) auf den Abbau der erfindungsgemäßen Zusammensetzung.
**Fig. 9** den Einfluss der Zugabe von 6% sekundärem Magnesiumphosphat (MgHPO₄ × 3H₂O) zu 6% tertiärem Calciumphosphat (Ca₃[PO₄]₂) bzw. 12% sekundärem Magnesiumphosphat (MgHPO₄ × 3H₂O) im Vergleich zur Zugabe von 12% Talkum (Mg₃[Si₄O₁₀(OH)₂], Standard) (B) auf den Abbau der erfindungsgemäßen Zusammensetzung.

### Ausführungsbeispiele:

### Rezepturen und Prozessparameter mit Diglycerin

### Variante 1

| | | |
|---|---|---|
| PBAT | Extruder | TSA EMP 26-40 |
| Polylactid | D/L | 26mm/40 D |
| Stärke | Schneckendrehzahl | 200 [U/min] |
| Diglycerin | Druck vor der Düse | 14-15 [bar] |
| Kreide | | |
| Talkum | | |
| Additive | | |

wobei PBAT in Anteilen zwischen 30% und 70%, Polylactid (dispergierte Phase) in Anteilen zwischen 1% und 25%, Stärke in Anteilen zwischen 1% und 25%, Kreide (Füllstoff) in Anteilen zwischen 1% und 25%, Talkum (Füllstoff) in Anteilen zwischen 1% und 25% und Additive in Anteilen zwischen 0,1% und 5%, Diglycerin zwischen 1% und 6% bezogen auf das Gesamtgewicht der Rezeptur eingesetzt werden kann.

| | | | | | | | | |
|---|---|---|---|---|---|---|---|---|
| Zone | 1 | 2 | 3 | 4 | 5 | 6 | 7 | 8 Düse |
| Soll | 140 | 150 | 155 | 160 | 170 | 175 | 170 | 160 |
| Ist | 140 | 150 | 156 | 163 | 170 | 177 | 171 | 165 |

### Variante 2

PBAT
Polylactid
Stärke
Diglycerin
Glycerin
Talkum
Additive
wobei PBAT in Anteilen zwischen 30% und 70%, Polylactid (dispergierte Phase) in Anteilen zwischen 1% und 25%, Stärke in Anteilen zwischen 1% und 25%, Talkum (Füllstoff) in Anteilen zwischen 1% und 25% und Additive in Anteilen zwischen 0,1% und 5% ein, Diglycerin und Glycerin zwischen 1% und 6% bezogen auf das Gesamtgewicht der Rezeptur eingesetzt werden können.

| Zone | 1 | 2 | 3 | 4 | 5 | 6 | 7 | 8 Düse |
|---|---|---|---|---|---|---|---|---|
| Soll | 140 | 150 | 155 | 160 | 170 | 175 | 170 | 160 |
| Ist | 140 | 150 | 155 | 165 | 170 | 175 | 171 | 162 |

### Variante 3

| | | |
|---|---|---|
| PBST | Extruder | Leistritz ZSE 40 |
| Polylactid | D/L | 26mm/40 D |
| Diglycerin | Schneckendrehzahl | 180 [U/min] |
| Glycerin | | |
| Kreide | Druck vor Düse | 11-12 [bar] |
| Talkum | | |
| Additive | | |

wobei PBST in Anteilen zwischen 30% und 70%, Polylactid (dispergierte Phase) in Anteilen zwischen 1% und 25%, Kreide in Anteilen zwischen 1% und 25%, Talkum (Füllstoff) in Anteilen zwischen 1% und 25% und Additive in Anteilen zwischen 0,1% und 5%, Diglycerin und Glycerin zwischen 1% und 6% bezogen auf das Gesamtgewicht der Rezeptur eingesetzt werden können.

| | | | | | | | | | | | |
|---|---|---|---|---|---|---|---|---|---|---|---|
| Zone | 1 | 2 | 3 | 4 | 5 | 6 | 7 | 8 | Flansch 1 | Flansch 2 | Düse |
| Soll | 135 | 135 | 140 | 155 | 155 | 155 | 155 | 160 | 160 | 160 | 165 |
| Ist | 135 | 135 | 135 | 155 | 155 | 155 | 155 | 155 | 160 | 160 | 165 |

Bei einer Standardrezeptur, bestehend aus einem Matrixpolymer und einem weiteren vorzugsweise biogenen Polymer werden die klassischen anorganischen Füllstoffe durch Calciumsulfate, vorzugsweise Gips ersetzt Im vorliegenden Beispiel handelt es sich um die Calciumsulfat-Verbindungen Gips - Anhydrid (Ca[SO₄]), Gips-Hemihydrat (Ca[SO₄] × ½ H₂O) und Gips-Dihydrat (Ca[SO₄] × 2 H₂O), wobei PBAT (kontinuierliche Phase) in Anteilen zwischen 50% und 70%, Polylactid (dispergierte Phase) in Anteilen zwischen 1% und 25%, Calciumsulfate (Füllstoff) in Anteilen zwischen 1% und 35%, Talkum (Füllstoff) in Anteilen zwischen 1% und 25% und Additive in Anteilen zwischen 0,1% und 5% eingesetzt werden können.

| **A** | **B** | **C** | **D** |
|---|---|---|---|
| PBAT | PBAT | PBAT | PBAT |
| PLA | PLA | PLA | PLA |
| Ca[CO₃] | Ca[SO₄] | Ca[SO₄] × ½ H₂O | Ca[SO₄] × 2 H₂O |
| (Kreide) | (Gips-Anhydrid) | (Gips-Hemihydrat) | (Gips- Dihydrat) |
| Talkum | Talkum | Talkum | Talkum |
| Additiv | Additiv | Additiv | Additiv |

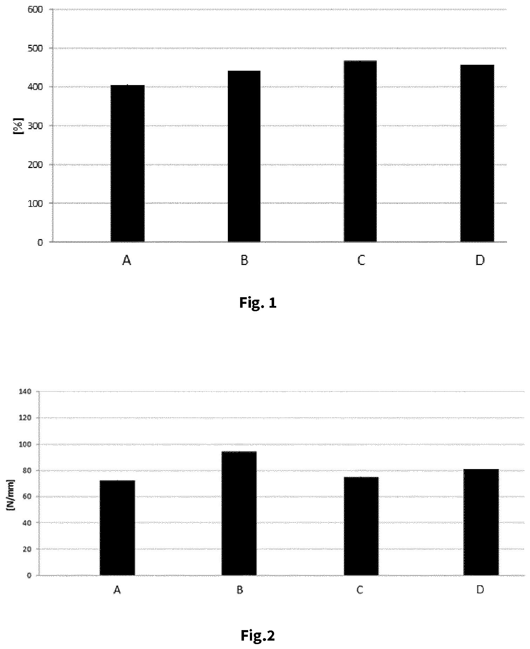

Dabei hat sich überraschend gezeigt, dass die Sulfate des Calciums einen positiven Effekt auf die Werte der Bruchdehnung und Weiterreißarbeit haben. So lassen sich bei Einsatz von Calciumsulfat sowohl Bruchdehnung als auch Weiterreißarbeit transversal um über 10% verbessern (Fig. 1 und Fig. 2).

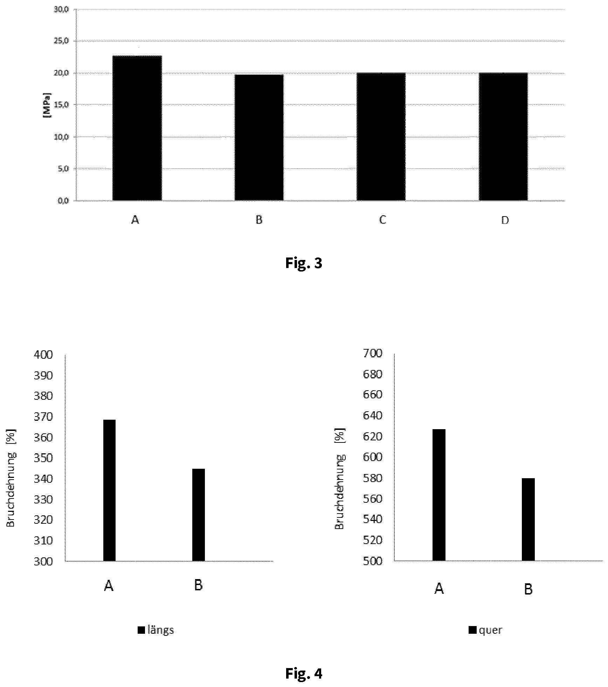

Mit der erfindungsgemäßen Rezeptur können nicht alle Parameter gleichzeitig verbessert werden. So verringert sich beim Einsatz von Sulfaten im Compound die der Bruchdehnung komplementäre Bruchspannung. Jedoch sind die Abweichungen mit ca. 10% relativ gering (Fig. 3) und damit weitgehend akzeptabel.

Gerade die positiven Effekte der erfindungsgemäßen Zusammensetzung auf die Dehnungskenngrößen sind dabei für die klassischen praktischen Anwendungsfelder wie Tragetaschen, Beutel oder Folien sehr attraktiv.

### Variante 4

Ein Compound bestehend aus einem Matrixpolymer und einer dispergierten Polymerphase wird gemäß der Stand der Technik Rezeptur (Standard) aus Gründen der Kosteneffizienz, aber auch zur Erlangung vorgegebener Festigkeitswerte mit anorganischen Füllstoffen wie Kreide und Talkum befrachtet. Beispielhaft für den hier benannten Standard ist vorliegend ein Anteil von 6%, 12% oder 18% anorganischer Füllstoff bezogen auf das Gesamtgewicht der Rezeptur eingesetzt worden.

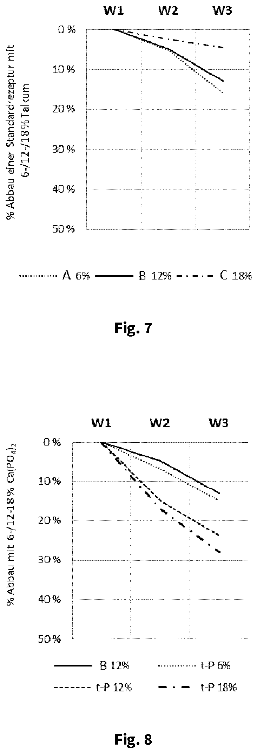

Beim Austausch von Kreide oder Talkum durch tertiäres Calciumphosphat zeigte sich nun überraschend, dass die Abbaurate des Compounds gegenüber dem o.g. Standard schon nach einer Verweilzeit von zwei Wochen um ein Mehrfaches zunahm. Beispielhaft baute eine erfindungsgemäße Folie mit 6% tertiärem Calciumphosphat im Vergleich zu einer entsprechenden Folie mit Talkum (Standard) anstelle von tertiärem Calciumphosphat um das 1,4-fache, eine erfindungsgemäße Folie mit 12% tertiärem Calciumphosphat im Vergleich zum Standard (12% Talkum) um das 3,2-fache und eine erfindungsgemäße Folie mit 18% tertiärem Calciumphosphat im Vergleich zum Standard (18% Talkum) um das 5-fache schneller ab (siehe Fig. 7, Fig. 8). Dabei ist beachtenswert, dass mit Zunahme des anorganischen Füllstoffs Talkum die Abbaurate der erfindungsgemäßen Folie tendenziell abnimmt, hingegen mit der Zunahme des anorganischen Füllstoffs tertiärem Calciumphosphat zunimmt, was eine Feinabstimmung der Abbaurate durch entsprechenden Einsatz dieser Füllstoffe ermöglicht.

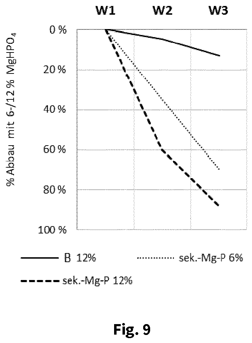

Noch wesentlich gesteigert tritt die Zunahme der Abbaurate auf, wenn das tertiäre Calciumphosphat durch ein sekundäres Magnesiumphosphat ersetzt oder anteilig ersetzt wurde. Die Abbaurate vervielfachte sich in einem hier beschriebenen Beispiel um das 7-fache von 5% auf 35% schon bei einer Halbierung des Anteils des tertiäre Calciumphosphat von 12% auf 6% und Einsatz von 6% sekundären Magnesiumphosphats im Vergleich zu einem entsprechenden Ansatz mit Talkum (12%, Standard; siehe Fig. 9).

Steigert man den Anteil des sekundären Magnesiumphosphats aber auf 12%, dann ergibt sich bereits ein hoher Multiplikator der Abbaurate von fast 18. Gleichsam aus diesem Grund wurde in den vorgenannten Versuchen keine weitere Steigerung des magnesiumhaltigen Fülleranteils mehr getestet Die Abbaurate ist dann nämlich derart hoch, dass die Bestimmung materialspezifischer Eigenschaften hinsichtlich ihrer Festigkeitswerte kaum noch Sinn macht (nicht gezeigt).

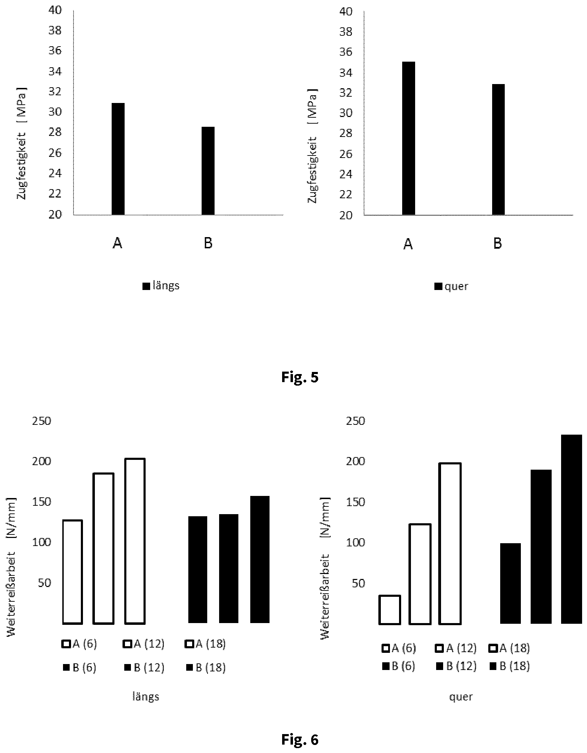

Sieht man von diesem letzten Aspekt ab, ist es unerwartet und vorteilhaft, dass sich die materialspezifischen Eigenschaften der Zugfestigkeit und Bruchdehnung der erfindungsgemäßen Rezepturen mit tertiärem phosphathaltigen anorganischen Füllstoffen und sekundären magnesiumhaltigen Phosphaten bis ca. 6% Anteil im Vergleich zu dem Talkum-haltigen Rezepturstandard nur geringfügig unterscheiden (siehe Fig. 4, Fig. 5).

Dies gilt auch für die Weiterreißarbeit (längs), aber nicht für die Weiterreißarbeit (quer) der erfindungsgemäßen Rezepturen im Vergleich zu der Standardrezeptur (siehe Fig. 6). Völlig überraschend hat sich nun zusätzlich herausgestellt, dass sich mit Einbringung von Phosphaten in die Rezeptur eine dramatische Verbesserung der Weiterreißarbeit in Querrichtung erzielen lässt. Diese nimmt naturgemäß mit ansteigendem Füllstoffgehalt ab, liegt jedoch gegenüber dem Talkum-haltigen Standard bei 6%-Anteil um fast 300% höher und übertrifft selbst bei 18% Füllstoffanteil den Talkum-Standard immer noch um enorme 120%.

Dies ist besonders bemerkenswert, weil beispielsweise bei einer Folienanwendung nach dem Anriss die Weiterreißarbeit in Querrichtung das ausschlaggebende Stabilitäts-kriterium darstellt.

Die vorliegenden erfindungsgemäßen Rezepturen erlauben somit eine vorteilhafte Steuerung des Abbauverhaltens biologisch abbaubarer Compounds durch Variation des Rezepturanteils anorganischer Phosphate bei Erhalt oder sogar leichter Verbesserung der elastizitätsdefinierenden Kenngrößen.

## Patentansprüche

1. Thermoplastische Zusammensetzung, insbesondere für den Einsatz in der Extrusion und Compoundierung, umfassend:
(a) eine kontinuierliche Phase, die wenigstens ein erstes Polymer aufweist, welches aus einer Gruppe ausgewählt wird, welche einen Polyester, ein Polyesteramid, ein Polyesteretheramid, ein aliphatisches oder teilaromatisches Polyesterurethan oder Abmischungen davon, insbesondere solche Verbindungen oder Abmischungen mit hydrophoben Oberflächeneigenschaften aufweist,
(b) wenigstens eine dispergierte Phase, die
(i) als zweites Polymer wenigstens einen biogenen Vernetzer umfasst, welcher einen Wasseranteil von 0,1 bis 30 Gew. %, insbesondere von 5 bis 25 Gew. % in Bezug auf dessen Gesamtgewicht aufweist und worin das erste Polymer der kontinuierlichen Phase nicht mit dem zweiten Polymer der dispergierten Phase mischbar ist, und
(ii) wenigstens einen anorganischen Füllstoff, und
(iii) wenigstens einen Weichmacher aufweist,
**dadurch gekennzeichnet, dass**
der Weichmacher Diglycerin oder Abmischungen mit Diglycerin aufweist und der anorganische Füllstoff Phosphate des Calciums und/oder Magnesiums umfasst und einen Anteil von 0,1 bis 40 Gew. % in Bezug auf das Gesamtgewicht der Zusammensetzung hat und wobei die Zusammensetzung biologisch abbaubar und/oder kompostierbar ist.

2. Thermoplastische Zusammensetzung gemäß einem der vorstehenden Ansprüche, **dadurch gekennzeichnet, dass**
der Weichmacher eine Abmischung von
(a) Diglycerin und Triglycerin oder
(b) Diglycerin und Glycerin oder
(c) Diglycerin, Triglycerin und Glycerin aufweist,
wobei die Abmischung unter (a), (b) und (c) das Diglycerin in dieser Zusammenstellung wenigstens zwischen 25 und 75 Gew. % in Bezug auf die Summe (a) des Diglycerins und des Triglycerins, (b) des Diglycerins und des Glycerins oder (c) des Diglycerins, des Glycerins und des Triglycerins umfasst

3. Thermoplastische Zusammensetzung gemäß einem der vorstehenden Ansprüche,
**dadurch gekennzeichnet, dass**
der anorganische Füllstoff hydrophile Eigenschaften aufweist

4. Thermoplastische Zusammensetzung gemäß Anspruch 3, **dadurch gekennzeichnet, dass**
die Calciumphosphate, vorzugsweise Apatit bzw. Salze und Kondensate der ortho - Phosphorsäure sind und die Magnesiumphosphate monobasische, dibasische und tribasische Magnesiumphosphate sowie deren Hydrate sind.

5. Thermoplastische Zusammensetzung gemäß einem der vorstehenden Ansprüche, **dadurch gekennzeichnet, dass**
das erste Polymer der kontinuierlichen Phase
(a) biogene oder teilbiogene Komponenten aufweist und/oder ausgewählt ist aus einer Gruppe von Polyhydroxysäuren, Polyhydroxyalkanoaten, Polylactiden und Ligninen sowie deren Derivaten und/oder Copolymeren und insbesondere ausgewählt ist aus einer Gruppe bestehend aus Polybutylen-Adipat-Terephthalat (PBAT), Polybutylensebacinat-Terephthalat (PBST), Polybutylensuccinat (PBS), Polybutylensuccinat-Adipat (PBSA), und/oder
(b) synthetische Komponenten aufweist und ausgewählt ist aus einer Gruppe von aliphatischen und aromatischen Polyestern sowie aliphatisch-aromatischen CoPolyestern, beispielsweise Polybutylen-Adipat-Terephthalat (PBAT).

6. Thermoplastische Zusammensetzung gemäß einem der vorstehenden Ansprüche, **dadurch gekennzeichnet, dass**
die Zusammensetzung als eine weitere dispergierte Phase wenigstens ein amorphes oder teilkristallines und insbesondere biogenes Polymer umfasst

7. Thermoplastische Zusammensetzung gemäß Anspruch 6, **dadurch gekennzeichnet, dass**
das amorphe oder teilkristalline und insbesondere biogene Polymer ein Polymer oder Copolymer von Polymilchsäure (PLA) oder ein Polymer oder Copolymer von Polyhydroxyalkanoat (PHA) oder einer Abmischung aus wenigstens zwei der vorgenannten ist.

8. Thermoplastische Zusammensetzung gemäß einem der vorstehenden Ansprüche, **dadurch gekennzeichnet, dass**
der biogene Vernetzer der dispergierten Phase polysaccharidische Strukturelemente umfasst, die aus einer Gruppe stammen, welche Stärken, die jeweils insbesondere eine spezifische Zusammensetzung aus Amylose und Amylopektin beinhalten, wie beispielsweise aus Kartoffel, Mais, Buchweizen, Weizen, Roggen, Hafer, Gerste, Reis, Erbsen und Tapioka, aufweisen.

9. Thermoplastische Zusammensetzung gemäß Anspruch 8, **dadurch gekennzeichnet, dass** der biogene Vernetzer der dispergierten Phase wenigstens ein zusätzliches polysaccharidisches Strukturelement aufweist, insbesondere ausgewählt aus der Gruppe bestehend aus Cellulose, Hemicellulose und/oder deren Derivaten, insbesondere Acetat-, Ester- und Ether-Derivaten.

10. Thermoplastische Zusammensetzung gemäß Anspruch 6, **dadurch gekennzeichnet, dass**
das Verhältnis der polysaccharidischen Strukturelemente der dispergierten Phase zu dem wenigstens einen ersten Polymer der kontinuierlichen Phase 10 zu 90 Gew. % bis zu 90 zu 10 Gew. %, vorzugsweise in einem Verhältnis von 30 zu 70 Gew. % bis zu 70 zu 30 Gew. % und stärker bevorzugt in einem Verhältnis von 60 zu 40 Gew. % bis zu 40 zu 60 Gew. % ist, in Bezug auf die Summe der polysaccharidischen Strukturelemente der dispergierten Phase zu dem wenigstens einen ersten Polymer der kontinuierlichen Phase.

11. Verfahren zum Herstellen von Folien, Filmen, Formkörpern, Schaumstoffen, Beschichtungen, Lacken und Dispersionen unter Einsatz der thermoplastischen Zusammensetzung gemäß einem der Ansprüche 1 bis 10.

12. Verwendung einer thermoplastischen Zusammensetzung gemäß einem der Ansprüche 1 bis 11 zur Herstellung von Folien, Filmen, Formkörpern, Schaumstoffen, Beschichtungen, Lacken und Dispersionen gemäß Anspruch 11.

## Claims

1. Thermoplastic composition, in particular for use in extrusion and compounding, comprising:
(a) a continuous phase which has at least one first polymer, which is selected from a group which has a polyester, a polyester amide, a polyester ether amide, an aliphatic or partially aromatic polyester urethane or admixtures thereof, in particular the compounds or admixtures having hydrophobic surface properties,
(b) at least one dispersed phase which
(i) comprises as a second polymer at least one biogenic cross-linking agent which has a water proportion of from 0.1 to 30% by weight, in particular from 5 to 25% by weight with respect to the overall weight thereof and wherein the first polymer of the continuous phase cannot be mixed with the second polymer of the dispersed phase, and
(ii) at least one inorganic filler, and
(iii) at least one plasticiser,
**characterised in that**
the plasticiser has diglycerol or admixtures with diglycerol and the inorganic filler comprises phosphates of calcium and/or magnesium and has a proportion of from 0.1 to 40% by weight with respect to the overall weight of the composition and wherein the composition is biodegradable and/or compostable.

2. Thermoplastic composition according to the preceding claim, **characterised in that**
the plasticiser has an admixture of:
(a) diglycerol and triglycerol or
(b) diglycerol and glycerol or
(c) diglycerol, triglycerol and glycerol,
wherein the admixture under (a), (b) and (c) comprises the diglycerol in this composition at least between 25 and 75% by weight with respect to the total (a) of the diglycerol and the triglycerol, (b) of the diglycerol and the glycerol or (c) of the diglycerol, the glycerol and the triglycerol.

3. Thermoplastic composition according to any one of the preceding claims,
**characterised in that**
the inorganic filler has hydrophilic properties.

4. Thermoplastic composition according to claim 3,
**characterised in that**
the calcium phosphates are preferably apatite or salts and condensates of the orthophosphoric acid and the magnesium phosphates are monobasic, dibasic and tribasic magnesium phosphates and the hydrates thereof.

5. Thermoplastic composition according to any one of the preceding claims,
**characterised in that**
the first polymer of the continuous phase
(a) has biogenic or partially biogenic components and/or is selected from a group of polyhydroxy acids, polyhydroxyalkanoates, polylactides and lignins and the derivatives and/or copolymers thereof and is in particular selected from a group comprising polybutylene-adipate-terephthalate (PBAT), polybutylene sebacate-terephthalate (PBST), polybutylene succinate (PBS), polybutylene succinate adipate (PBSA), and/or
(b) has synthetic components and is selected from a group of aliphatic and aromatic polyesters and aliphatic-aromatic copolyesters, for example, polybutylene-adipate-terephthalate (PBAT) .

6. Thermoplastic composition according to any one of the preceding claims,
**characterised in that**
the composition comprises as an additional dispersed phase at least one amorphous or partially crystalline and in particular biogenic polymer.

7. Thermoplastic composition according to claim 6,
**characterised in that**
the amorphous or partially crystalline and in particular biogenic polymer is a polymer or copolymer of polylactic acid (PLA) or a polymer or copolymer of polyhydroxyalkanoate (PHA) or an admixture of at least two of the above-mentioned polymers.

8. Thermoplastic composition according to any one of the preceding claims,
**characterised in that**
the biogenic cross-linker of the dispersed phase comprises polysaccharide structural elements which originate from a group which has starches which in each case contain in particular a specific composition of amylose and amylopectin, such as, for example, potato, corn, buckwheat, wheat, rye, oats, barley, rice, peas and tapioca.

9. Thermoplastic composition according to claim 8,
**characterised in that**
the biogenic cross-linker of the dispersed phase has at least one additional polysaccharide structural element, in particular selected from the group comprising cellulose, hemicellulose and/or the derivatives thereof, in particular acetate, ester and ether derivatives.

10. Thermoplastic composition according to claim 6,
**characterised in that**
the ratio of the polysaccharide structural elements of the dispersed phase to the at least one first polymer of the continuous phase is from 10 to 90% by weight to 90 to 10% by weight, preferably at a ratio of from 30 to 70% by weight to 70 to 30% by weight and more preferably at a ratio of from 60 to 40% by weight to 40 to 60% by weight with respect to the total of the polysaccharide structural elements of the dispersed phase to the at least one first polymer of the continuous phase.

11. Method for producing foils, films, shaped members, foams, coatings, paints and dispersions using the thermoplastic composition according to any one of claims 1 to 10.

12. Use of a thermoplastic composition according to any one of claims 1 to 11 for producing foils, films, shaped members, foams, coatings, paints and dispersions according to claim 11.

## Revendications

1. Composition thermoplastique, notamment pour une utilisation en extrusion et en compoundage, comprenant :
(a) une phase continue qui comprend au moins un premier polymère choisi dans un groupe comprenant polyester, polyesteramide, polyesterétheramide, polyester uréthane aliphatique ou partiellement aromatique ou leurs mélanges, en particulier des composés ou mélanges présentant des propriétés de surface hydrophobes,
(b) au moins une phase dispersée, qui comprend
(i) en tant que deuxième polymère, au moins un agent de réticulation biogénique, présentant une teneur en eau de 0,1 à 30 % en poids, en particulier de 5 à 25% en poids, par rapport à son poids total et dans lequel le premier polymère de la phase continue n'est pas miscible dans le second polymère de la phase dispersée, et contient :
(ii) au moins une charge inorganique, et
(iii) au moins un plastifiant,
**caractérisé en ce que**
le plastifiant comporte du diglycérol ou des mélanges contenant du diglycérol et la charge inorganique comprend des phosphates de calcium et/ou de magnésium et représente une proportion de 0,1 à 40% en poids par rapport au poids total de la composition, ladite composition étant biodégradable et/ou compostable.

2. Composition thermoplastique selon l'une quelconque des revendications précédentes, **caractérisée en ce que** le plastifiant est un mélange :
(a) de diglycérol et de triglycérol, ou
(b) de diglycérol et de glycérol, ou
(c) diglycérol, triglycérol et glycérol,
où, dans cette composition du mélange de (a), (b) et (c), le diglycérol forme au moins de 25 à 75% en poids par rapport à la somme (a) des diglycérol et triglycérol, (b) des diglycérol et glycérol, ou (c) des diglycérol, glycérol et triglycérol.

3. Composition thermoplastique selon l'une quelconque des revendications précédentes, **caractérisée en ce que** la charge inorganique présente des propriétés hydrophiles

4. Composition thermoplastique selon la revendication 3, **caractérisée en ce que** les phosphates de calcium, sont de préférence l'apatite ou des sels et condensats de l'acide orthophosphorique, et les phosphates de magnésium sont des phosphates de magnésium monobasiques, dibasiques et tribasiques ainsi que leurs hydrates.

5. Composition thermoplastique selon l'une quelconque des revendications précédentes, **caractérisée en ce que** le premier polymère de la phase continue
(a) comprend des composants biogéniques ou partiellement biogéniques et/ou est choisi dans un groupe formé de polyhydroxyacides, de polyhydroxyalcanoates, de polylactides et de lignines ainsi que leurs dérivés et/ou copolymères et est en particulier choisi dans un groupe constitué de poly(butylène adipate-co-téréphtalate) (PBAT), de poly(butylènesébacate-co-téréphtalate) (PBST), de poly(butylène succinate) (PBS), de poly(butylène succinate-co-adipate) (PBSA), et/ou
(b) comprend des composants synthétiques et est choisi dans un groupe de polyesters aliphatiques et aromatiques tels que copolyesters aliphatiquesaromatiques, par exemple le poly(butylène adipate-co-téréphtalate) (PBAT).

6. Composition thermoplastique selon l'une quelconque des revendications précédentes, **caractérisée en ce que** la composition, en tant que phase plus dispersée comprend au moins un polymère amorphe ou partiellement cristallin et en particulier biogénique.

7. Composition thermoplastique selon la revendication 6, **caractérisée en ce que** le polymère amorphe ou partiellement cristallin et notamment biogénique est un polymère ou copolymère d'acide polylactique (PLA) ou un polymère ou copolymère de polyhydroxyalcanoate (PHA) ou un mélange d'au moins deux de ceux-ci.

8. Composition thermoplastique selon l'une quelconque des revendications précédentes, **caractérisée en ce que** l'agent de réticulation biogénique de la phase dispersée comprend des éléments structuraux polysaccharidiques qui sont issus d'un groupe constitué d'amidons, dont chacun contient notamment une composition spécifique d'amylose et d'amylopectine, tels que par exemple de pomme de terre, de maïs, de sarrasin, de blé, de seigle, d'avoine, d'orge, riz, pois et tapioca.

9. Composition thermoplastique selon la revendication 8, **caractérisée en ce que** l'agent de réticulation biogénique de la phase dispersée comporte au moins un élément de structure polysaccharidique additionnel, notamment choisi dans le groupe constitué par la cellulose, l'hémicellulose et/ou leurs dérivés, notamment les dérivés d'acétate, d'esters et d'éthers.

10. Composition thermoplastique selon la revendication 6, **caractérisée en ce que** la teneur des éléments structuraux polysaccharidiques de la phase dispersée/à au moins un premier polymère de la phase continue est de 10 à 90% en poids à 90 à 10% en poids, de préférence de 30 à 70% en poids à 70 à 30% en poids et plus préférentiellement une teneur de 60 à 40% en poids à 40 à 60% en poids, de la somme des éléments structuraux polysaccharidiques de la phase dispersée par rapport à au moins un premier polymère de la phase continue.

11. Procédé de production de feuilles, films, moulages, mousses, revêtements, peintures et dispersions utilisant la composition thermoplastique selon l'une quelconque des revendications 1 à 10.

12. Utilisation d'une composition thermoplastique selon l'une quelconque des revendications 1 à 11, pour la fabrication de feuilles, films, moulages, mousses, revêtements, laques et dispersions selon la revendication 11.
